# EUROPÄISCHE PATENTSCHRIFT

(11) **EP 2 230 577 B1**
(45) Veröffentlichungstag und Bekanntmachung des Hinweises auf die Patenterteilung: **07.09.2011**
(21) Anmeldenummer: 10152073.2
(22) Anmeldetag: 29.01.2010
(51) Int. Cl.: G05B 19/042, G05B 19/418, G05B 23/02

(54) **Diagnoseverfahren für ein nach dem AS-Interface Standard ausgeführtes Feldbussystem**
Diagnosis method for a field bus system designed in accordance with the AS interface standard
Procédé de diagnostic pour un système de bus de terrain conçu selon la norme interface AS

(30) Priorität: 17.03.2009 DE 102009013229
(43) Veröffentlichungstag der Anmeldung: 22.09.2010
(73) Patentinhaber: SIEMENS AKTIENGESELLSCHAFT, 80333 München (DE)
(72) Erfinder: Fritsch, Andreas, 92245 Kümmersbruck (DE); Meier, Matthias, 92284 Poppenricht (DE); Spindler, Konrad, 92289 Ursensollen (DE)

(56) Entgegenhaltungen:
- FESTO, RUITER STRASSE 82 73734 ESSLINGEN-BERKHEIM GERMANY, 31. Oktober 2003 (2003-10-31), XP040423402
- IFM Electronic: "Controller E, AS-i Gateways für viele Feldbusse"[Online] 30. April 2008 (2008-04-30), XP002590087 BUSSYSTEME PRODUCT NEWS Gefunden im Internet: URL:http://www.ifm.com/obj/e3_AC13___d_08_ n.pdf> [gefunden am 2010-07-09]

## Beschreibung

Die Erfindung betrifft ein Diagnoseverfahren für ein nach dem AS-Interface Standard ausgeführten Feldbussystem gemäß Anspruch 1.

Ein Feldbus ist ein industrielles Kommunikationssystem auf der untersten Steuerungsebene eines Automatisierungssystems, das eine Vielzahl von Feldgerätebaugruppen wie Messfühler (Sensoren), Stellglieder und Antriebe (Aktoren), aber auch Motorstarter und Frequenzumrichter mit einem übergeordneten Steuerungsgerät verbindet.

AS-Interface (AS-i = Aktor-Sensor-Interface) ist ein möglicher Kommunikationsstandard zur Kommunikation zwischen der mit dem Steuerungsgerät verbundenen Masterbaugruppe und den Feldgerätebaugruppen (Slaves) über einen solchen Feldbus.

Bei einem nach den AS-Interface Spezifikationen ausgebildeten Feldbus hat der Master als einziger das Recht, unaufgefordert auf den Feldbus zuzugreifen. Der Master sendet dabei zyklisch an alle Slavebaugruppen eine Anfrage und tauscht so mit den Slaves Daten über ein serielles Übertragungsprotokoll mit einer Nutzdatenbreite von 4 Bit aus. Die Slaves dürfen und können von sich aus nicht auf den Feldbus zugreifen und müssen warten, bis sie vom Master gefragt werden. Jedem der Slaves ist dazu eine eindeutige Adresse zugewiesen. In einem AS-Interface können nach derzeitiger Spezifikation (Vers. 3.0) so maximal 62 Teilnehmer an einen Master angeschlossen werden.

Als Übertragungsmedium für den Feldbus wird eine bevorzugt als Flachbandkabel ausgeführte, ungeschirmte zweiadrige Leitung verwendet, die gleichzeitig auch als Stromversorgung für Slaves dienen kann. Das Übertragungsprotokoll wird dazu auf die Spannungsversorgung aufmoduliert. Es kommen dabei die Manchester-Codierung und eine Alternierende Puls Modulation Codierung (APM-Codierung) zum Einsatz. So können Bit-Zeiten von 6µs verwirklicht werden.

Neben der Kommunikation der reinen Nutzdaten können auch zusätzlich Diagnosedaten übertragen werden. In diesem Fall sendet die Steuerung über die Masterbaugruppe eine Anfrage an die Slaves, worauf diese Informationen über ihren aktuellen Zustand zurückmelden. Die nach aktueller AS-i Spezifikation (Vers. 3.0) zur Verfügung gestellten Diagnoseverfahren erlauben nur eine sehr eingeschränkte Diagnosemöglichkeit, um den aktuellen Zustand einer einzelnen Slavebaugruppe im zyklischen Betrieb abzufragen. Diese beschränkt sich bei heute üblichen Systemen auf die Verfügbarkeit einer 1-Bit Information (z.B. S1-Bit im Slave Statusregister) oder einer 4-Bit Information (z.B. Parameterecho), die ein Slave dem Anwender über den AS-i Master und die übergeordnete Steuerung liefern kann.

Bei komplexeren Slavebaugruppen, wie z.B. Motorstartern und Frequenzumrichtern, wird diese 1-Bit Information (S1-Bit) heute aus der Verknüpfung einer Vielzahl von möglichen Fehlerursachen im Slave generiert und als 1-Bit Sammelfehlermeldung an den Master zurückgesendet. Die eindeutige Zuordnung, welcher Fehler innerhalb der Slavebaugruppe diese Fehlermeldung verursacht hat, ist hier für den Anwender durch die Auswertung dieser 1-Bit Rückmeldung nicht mehr möglich.

Aufgabe der Erfindung ist es, ein Diagnoseverfahren zur Verfügung zu stellen, das die zuvor beschriebenen Nachteile überwindet.

Diese Aufgabe wird mit dem Diagnoseverfahren mit den Merkmalen des Anspruchs 1 gelöst.

Der Erfindung liegt dabei ein Verfahren zugrunde, mit dem zum Einen die Datenmenge der Diagnoseinformation einer Slavebaugruppe über den Feldbus erhöht werden kann und zum Anderen die neu hinzu gewonnenen Diagnoseinformationen gezielt spezifischen Diagnosegruppen in einer Slavebaugruppe, wie z.B. Meldungen, Warnungen, Zustände, Fehler, etc. zugeordnet werden können.

Dabei ergibt sich die verbesserte Diagnosefähigkeit insbesondere durch die Erhöhung der Diagnose-Nutzdatenbreite und durch die Priorisierung der Diagnosemeldungen. Das heißt, der Anwender kann gezielt wählen, welche Gruppe von Diagnosedaten er von der Slavebaugruppe ausliest.

Bevorzugt kann dabei der Anwender durch folgende Maßnahmen selektiv festlegen, welche Diagnosemeldungen er von welcher Slavebaugruppe zurückgemeldet haben will:
- Übertragen eines individuellen Bitmusters der Parameterbits, die vom Master zum Slave übertragen werden,
- Auswahl der Diagnosegruppe über eine Hardware basierte Einstellmöglichkeit (z.B. DIP-Schalter, Jumper, etc.),
- Auswahl der Diagnosegruppe über einen AS-i spezifischen Gerätekonfigurationswert (z.B. ID1).

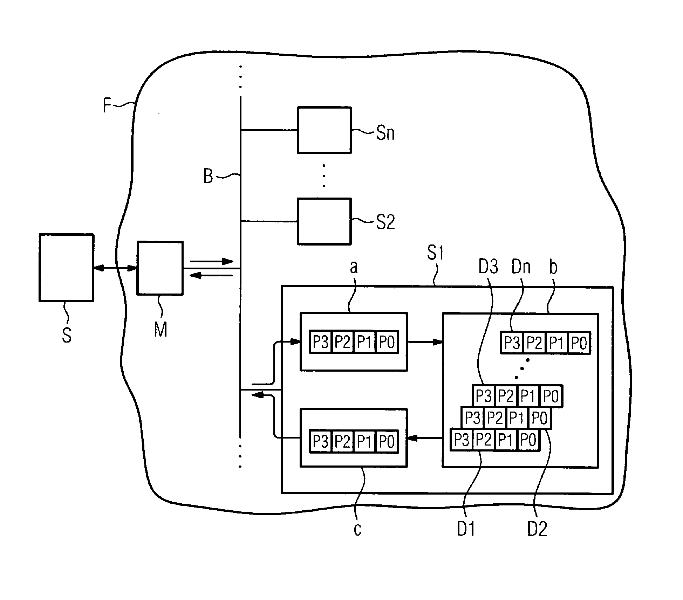

Die Erfindung soll nun anhand des in der Figur gezeigten Blockschaltbildes beispielhaft erläutert werden.

Dargestellt ist eine übergeordnete Steuerung S, die mit einer Feldbaugruppe F als Master M eines Feldbussystems kommuniziert. Diese Masterbaugruppe M ist wiederum über den nach dem AS-i Standard kommunizierenden Feldbus B mit einer Anzahl von Slavebaugruppen S1 bis Sn verbunden. Diese Slavebaugruppen können Feldgeräte wie beispielsweise Messfühler, Stellglieder, aber auch komplexere Baugruppen wie Motorstarter und Frequenzumrichter sein, die in einem Automatisierungssystem zusammen wirken und kommunizieren müssen.

Gerade komplexere Baugruppen wie Motorstarter können aber eine Vielzahl von Betriebszuständen und damit auch eine Vielzahl von Fehlerzuständen annehmen. Das wesentliche der vorliegenden Erfindung ist nun gerade diese Vielzahl von möglichen Zuständen möglichst eindeutig innerhalb des Automatisierungssystems zu kommunizieren und somit auch einem Anwender zur Verfügung zu stellen, so dass dieser entsprechend reagieren kann.

Dazu weist - beispielhaft gezeigt - die Slavebaugruppe S1 in dem in der Figur gezeigten Blockschaltbild Mittel zum Auswählen a, Mittel zum Auslesen b und Mittel zum Rückmelden c auf. Die Mittel a werden dabei durch die Masterbaugruppe M mittels eines für diese Slavebaugruppe S1 adressierten Telegramms angesprochen, um so Diagnoseinformationen über den Zustand dieser Slavebaugruppe S1 zu erhalten. Anschließend erfolgt in den nachgeschalteten Mitteln b die Auswahl einer Diagnosegruppe aus einer Vielzahl von möglichen Diagnosegruppen D1 bis Dn, wobei diese Auswahl der Diagnosegruppe anhand des Telegramms und des aktuellen Betriebszustandes der Slavebaugruppe S1 erfolgt. Anschließend wird mit den Mitteln c die in der ausgewählten Diagnosegruppe enthaltenen Diagnoseinformationen von der Slavebaugruppe S1 an die Masterbaugruppe M zurückgemeldet. Somit hat der Anwender die Möglichkeit konkrete Informationen über den Zustand jeder der Slavebaugruppen zu erhalten.

In einer konkreten Ausführungsform werden so beispielsweise die in den AS-i Spezifikationen definierten Nutzdatenbits P0 bis P3 genutzt und so beispielsweise ein Telegramm "Write-Parameter" mit dem Parameter-Wert P0=(0/1); P1=x; P2 =x; P3 =x an eine der Slavebaugruppen S1 bis Sn gesendet. Die angesprochene Slavebaugruppe - hier S1 - sendet dann im laufenden Betrieb in der "Slave-Antwort" die Diagnoseinformation über den Master M an die Steuerung S zurück. Im vorliegenden Beispiel legt dabei das Bit P0 (Diagnoseanforderung) fest, ob eine Fehler-Diagnose (P0=1) oder eine Warnungs-/Meldungs-Diagnose (P0=0) als Slaveantwort an den Master M zurückgegeben wird. Dabei könnte bei einer weiteren Detaillierung auch die Anzahl der Diagnosegruppen D1 bis Dn auch über die Hinzunahme des P1- und P2-Bits in die Definition weiter erhöht werden.

Weiterhin könnte die Auswahl auch mittels eines Gerätekonfigurationsparameters erfolgen. Hierbei legt der AS-i spezifische Gerätekonfigurationswert ID1 fest, ob eine Fehler-Diagnose (ID1=7) oder eine Warnungs-Diagnose (ID1=6) oder Meldungs-Diagnose (ID1=5) als Slaveantwort an den Master M zurückgegeben wird. Die Anzahl der Diagnosegruppen könnte auch über die Hinzunahme weiterer ID1-Belegungen weiter erhöht werden.

## Patentansprüche

1. Diagnoseverfahren für einen nach dem AS-Interface Standard ausgeführten Feldbussystem mit einer Masterbaugruppe (M) und einer Anzahl von Slavebaugruppen mit folgenden Schritten:
- Ansprechen einer Slavebaugruppe durch die Masterbaugruppe mittels eines für diese Slavebaugruppe adressierten Telegramms, um Diagnoseinformationen über den Zustand dieser Slavebaugruppe zu erhalten,
- Auswahl einer Diagnosegruppe wie z.B. Meldungen, Warnungen, Zustände, Fehler aus einer Vielzahl von möglichen Diagnosegruppen in dieser Slavebaugruppe,
- Auslesen von Diagnoseinformationen aus der angesprochenen Diagnosegruppe,
- Rückmelden der Diagnoseinformationen dieser Diagnosegruppe von der Slavebaugruppe an die Masterbaugruppe,
- wobei in der angesprochenen Slavebaugruppe die Auswahl der Diagnosegruppe anhand des Telegramms und des aktuellen Betriebszustandes der Slavebaugruppe erfolgt.

2. Diagnoseverfahren nach Anspruch 1,
**dadurch gekennzeichnet , dass** das von der Masterbaugruppe gesendete Telegramm ein Parameterbitmuster enthält anhand dessen in der angesprochenen Slavebaugruppe die Umschaltung und Auswahl zwischen den verschiedenen Diagnosegruppen erfolgt.

3. Diagnoseverfahren nach Anspruch 1,
**dadurch gekennzeichnet , dass** in der angesprochenen Slavebaugruppe die Auswahl der Diagnosegruppe mittels eines AS-i spezifischen Gerätekonfigurationswertes erfolgt.

## Claims

1. Diagnosis method for a field bus system designed in accordance with the AS interface standard and having a master subassembly (M) and a number of slave subassemblies, having the following steps:
- the master subassembly addresses a slave subassembly using a message addressed to this slave subassembly in order to obtain diagnostic information relating to the state of this slave subassembly,
- a diagnosis group, for example messages, warnings, states or errors, is selected from a multiplicity of possible diagnosis groups in this slave subassembly,
- diagnostic information is read from the addressed diagnosis group,
- the diagnostic information from this diagnosis group is reported back to the master subassembly by the slave subassembly,
- the diagnosis group being selected in the addressed slave subassembly using the message and the current operating state of the slave subassembly.

2. Diagnosis method according to Claim 1,
**characterized in that**
the message transmitted by the master subassembly contains a parameter bit pattern which is used to change over between, and select, the different diagnosis groups in the addressed slave subassembly.

3. Diagnosis method according to Claim 1,
**characterized in that**
the diagnosis group is selected in the addressed slave subassembly using an AS-i specific device configuration value.

## Revendications

1. Procédé de diagnostic pour un système de bus de terrain conçu selon la norme interface AS, comprenant un module ( M ) maître et un certain nombre de modules esclaves, comprenant les stades suivantes :
- le module maître s'adresse à un module esclave au moyen d'un télégramme adressé pour ce module esclave pour obtenir des informations de diagnostic sur l'état de ce module esclave,
- sélection d'un groupe de diagnostic, comme par exemple des messages, des avertissements, des états, des défauts parmi une pluralité de groupes de diagnostic possibles dans ce module esclave,
- lecture d'informations de diagnostic dans le groupe de diagnostic demandé,
renvoi des informations de diagnostic de ce groupe de diagnostic par le module esclave au module maître,
- dans lequel, dans le module d'esclave auquel le module maître s'est adressé, le choix du groupe de diagnostic s'effectue au moyen du télégramme et de l'état de fonctionnement présent du module esclave.

2. Procédé de diagnostic suivant la revendication 1,
**caractérisé en ce que**
le télégramme envoyé par le module maître contient un modèle de bit de paramètre au moyen duquel, dans le module esclave auquel le module maître s'est adressé, s'effectue la commutation et le choix entre les divers groupes de diagnostic.

3. Procédé de diagnostic suivant la revendication 1,
**caractérisé en ce que**,
dans le module escale auquel le module maître s'est adressé, le choix du groupe de diagnostic s'effectue au moyen d'une valeur de configuration d'appareil spécifique AS-i.
